# EUROPEAN PATENT APPLICATION

(11) **EP 4 722 506 A1**
(43) Date of publication of application: **08.04.2026**
(21) Application number: 24204559.9
(22) Date of filing: 03.10.2024
(51) Int. Cl.: F01N 3/021, F01N 3/025, F01N 3/10

(54) **DETERMINING AN EXOTHERM CHARACTERISTIC OF A SUBSTRATE COMPRISING AN OXIDATION CATALYST**

(71) Applicant: Johnson Matthey Public Limited Company, London EC2V 7AD (GB)
(72) Inventor: ARULRAJ, Kaneshalingam, Royston, SG8 5HE (GB); BOSHKOV, Trajche, Royston, SG8 5HE (GB); CHANDLER, Guy Richard, Royston, SG8 5HE (GB); GIDNEY, Jeremy Temple, Royston, SG8 5HE (GB)
(74) Representative: Johnson Matthey Public Limited Company

(57) **Abstract**

An apparatus for determining an exotherm characteristic of a substrate comprising an oxidation catalyst having a substrate inlet face and a substrate outlet face comprises: a non-engine-based heat source (7) configured to generate and output a heated gas flow through a gas outlet; a flow conduit (11) coupled with the gas outlet to receive the heated gas flow, the flow conduit (11) comprising an oxidation catalyst station (15) configured to hold a substrate (2) comprising an oxidation catalyst; a fuel injector (13) configured to inject fuel into the heated gas flow in the flow conduit (11) upstream of the oxidation catalyst station (15); and one or more temperature sensors, the one or more temperature sensors including one or more inlet face temperature sensors (18) configured to measure the temperature of the heated gas flow at an inlet face of a substrate comprising an oxidation catalyst (2) installed in the oxidation catalyst station (15) and one or more outlet face temperature sensors (20) configured to measure the temperature of the heated gas flow at an outlet face of said substrate comprising an oxidation catalyst (2) installed in the oxidation catalyst station (15).

## Description

### Field of the disclosure

The present invention relates to determining an exotherm characteristic of a substrate comprising an oxidation catalyst. In particular, it relates to apparatus, systems and methods that utilise a non-engine-based heat source, for example a non-engine-based diesel particulate generator for determining an exotherm characteristic of a substrate comprising an oxidation catalyst.

### Background

Diesel oxidation catalyst (DOC) substrates are known for use as a component in engine aftertreatment systems. For example, DOC substrates are designed to oxidise pollutants in exhaust gas generated by light- and heavy-duty engines. Carbon monoxide (CO), hydrocarbon (HC) and nitrogen oxide (NO) are oxidised by the DOC to carbon dioxide (CO₂), water (H₂O) and nitrogen dioxide (NO₂). In another example, hydrogen oxidation catalysts (HOC) are known for the catalytic combustion of hydrogen gas, e.g. in an exhaust system of a so-called H₂-Internal Combustion Engine (ICE), i.e. an internal combustion engine configured to run on a mixture of air and fuel, wherein the fuel of the mixture of air and fuel is a gaseous fuel comprising a majority fuel mass of hydrogen. The oxidation catalyst is for converting H₂ and optionally also NO in the exhaust to H₂O and NO₂, optionally for heating a downstream selective catalytic reduction (SCR) catalyst to improve the NOx conversion light-off temperature and/or to desulphate a downstream catalyst, including the SCR catalyst.

An aftertreatment system of an engine may include other components, for example filters, e.g. soot filters that are designed to remove particulate matter from the exhaust gas. The soot filter may in some examples be a catalysed soot filter. One common arrangement is to provide a catalysed soot filter downstream of a DOC or HOC substrate.

During use of soot filters with engines periodic re-generation may be required to remove a build-up of particulate matter within the substrate of the soot filter. One method of re-generation is to temporarily increase the temperature of the soot filter in order to burn-off the particulate matter from the filter substrate of the soot filter. One known method of heating the soot filter is to inject additional fuel into the exhaust upstream of a diesel oxidation catalyst (DOC) disposed upstream of the soot filter that is combusted on the DOC resulting in a temperature increase of the soot filter.

Alternatively, the aftertreatment system of the engine may include a SCR catalyst downstream of the DOC or HOC substrate, which SCR catalyst may require to be desulfated from time-to-time.

### Summary of the disclosure

In a first aspect of the present invention, there is provided an apparatus for determining an exotherm characteristic of a substrate comprising an oxidation catalyst having a substrate inlet face and a substrate outlet face, the apparatus comprising:
a non-engine-based heat source configured to generate and output a heated gas flow through a gas outlet;
a flow conduit coupled with the gas outlet to receive the heated gas flow, the flow conduit comprising an oxidation catalyst station configured to hold a substrate comprising an oxidation catalyst;
a fuel injector configured to inject fuel into the heated gas flow in the flow conduit upstream of the oxidation catalyst station; and
one or more temperature sensors, the one or more temperature sensors including one or more inlet face temperature sensors configured to measure the temperature of the heated gas flow at an inlet face of a substrate comprising an oxidation catalyst installed in the oxidation catalyst station and one or more outlet face temperature sensors configured to measure the temperature of the heated gas flow at an outlet face of said substrate comprising an oxidation catalyst installed in the oxidation catalyst station.

Beneficially, the invention provides a cost-effective, quick and flexible means for characterising the exotherm performance of an oxidation catalyst and avoids the need to perform tests of oxidation catalyst mounted to a vehicle, a stationary engine or a laboratory bench-mounted engine.

The apparatus may further comprise one or more hydrocarbon sensors configured to detect hydrocarbon slip through said substrate comprising the oxidation catalyst installed in the oxidation catalyst station. Optionally the one or more hydrocarbon sensors are located at or downstream of the outlet face of the oxidation catalyst. The one or more hydrocarbon sensors may be used to provide a means of confirming that the quench temperature has been reached.

The fuel injector may be located downstream of the non-engine-based heat source.

In some examples the apparatus further comprises one or more clean-up catalysts located in the flow conduit downstream of the oxidation catalyst station. Optionally two or more clean-up catalysts may be located in series in the flow conduit downstream of the oxidation catalyst station. The clean-up catalyst(s) may function to capture any HC slip passing through the oxidation catalyst station before the HC reaches atmosphere. The use of a second clean-up catalyst in series may allow for redundancy and/or a safety margin increasing the efficiency of HC capture. In some examples, the or each clean-up catalyst comprises a substrate comprising an oxidation catalyst, optionally a substrate comprising a diesel oxidation catalyst or a hydrogen oxidation catalyst. The one or more clean-up catalysts may each comprise a PGM-loaded oxidation catalyst substrate, e.g. a DOC or HOC.

The apparatus may further comprise a controller configured to control operation of the non-engine-based heat source and the fuel injector. In some examples the controller comprises a pre-programmed computer processor unit.

The controller may be configured to:
- control a fuel burn rate and/or a gas flow rate and/or a heat output of the non-engine-based heat source and/or to control an injection of fuel by the fuel injector, e.g. fuel injection rate and quantity, to generate an exotherm of a substrate comprising the oxidation catalyst installed in the oxidation catalyst station;
- to maintain said exotherm at a steady state for a first period of time;
- to then control the fuel burn rate and/or the gas flow rate and/or the heat output and/or to control the injection of fuel by the fuel injector to achieve a temperature ramp-down to achieve a temperature drop at a first rate at an inlet face of said substrate comprising the oxidation catalyst; and
- to determine using the one or more temperature sensors a quench temperature of said substrate comprising the oxidation catalyst.

In some examples the exotherm is at least 600°C.

In some examples determining the quench temperature comprises determining the heated gas flow temperature at the inlet face of said substrate comprising the oxidation catalyst when the heated gas flow temperature at the outlet face of said substrate comprising the oxidation catalyst reaches a threshold temperature.

In some examples the threshold temperature is 425°C to 500°C, optionally is 425°C or 500°C.

In some examples the first period of time is 5 minutes.

In some examples the first rate is 1°C temperature drop per minute.

In some examples the gas flow rate is 100 to 720 kg/hr, optionally is 400 kg/hr, or 720 kg/hr.

In some examples prior to generating the exotherm the controller is configured to condition said substrate comprising the oxidation catalyst by:
- obtaining and maintaining an inlet face temperature of said substrate comprising the oxidation catalyst of 490°C for 20 minutes;
- carrying out a fast cool-down to an inlet face temperature of about 320°C;
- holding the inlet face temperature at about 320°C for 10 minutes.

In some examples the oxidation catalyst of the substrate comprising the oxidation catalyst comprises or consists of a diesel oxidation catalyst. In other examples the oxidation catalyst of the substrate comprising the oxidation catalyst comprises or consists of a hydrogen oxidation catalyst.

In some examples the fuel that is injected by the fuel injector comprises or consists of diesel or hydrogen.

In some examples the non-engine-based heat source comprises a diesel particulate generator or an electrical heater.

The diesel particulate generator may be configured to stoichiometrically- or lean-burn a diesel fuel. In particular, the diesel particulate generator may be operated so as to minimise the generation of soot particles. This allows for cleaner operation of the apparatus while utilising the heat source capabilities of the diesel particulate generator.

In some examples the oxidation catalyst station is configured to hold a substrate having a diameter of 2.5 to 33 cm and/or a length of 2.5 to B 15.2cm.

The apparatus may further comprise a fuel reservoir containing a volume of diesel, natural gas (NG), liquid petroleum (LPG) or hydrogen fuel.

The apparatus may further comprise, in between the fuel injector and the substrate comprising the oxidation catalyst, means for producing an homogenous, or substantially homogenous, distribution of diesel fuel droplets in the heated gas flow across a cross-section of the flow conduit at the inlet face of the substrate of the oxidation catalyst. For example, the length, diameter and shape of the flow conduit between the fuel injector and the oxidation catalyst station may be configured to promote the homogenous distribution. Additionally, or alternatively, a mixer or diffuser may be incorporated to promote the homogenous distribution.

In a second aspect of the present invention, there is provided a system comprising the apparatus of the first aspect described above and a substrate comprising an oxidation catalyst held in the oxidation catalyst station.

The features and advantages of the first aspect apply equally to the second aspect.

In some examples the substrate comprising the oxidation catalyst comprises or consists of the substrate and a diesel oxidation catalyst or a hydrogen oxidation catalyst.

In some examples the substrate has a diameter of 2.5 to 33 cm and/or a length of 2.5 to 15.2 cm.

In a third aspect of the present invention, there is provided a method of determining an exotherm characteristic of a substrate comprising an oxidation catalyst, the method comprising:
- installing the substrate comprising the oxidation catalyst in an oxidation catalyst station of a flow conduit that is coupled to an outlet of a non-engine-based heat source;
- outputting a heated gas flow from the non-engine-based heat source into the flow conduit and passing the heated gas flow through the substrate comprising the oxidation catalyst;
- injecting fuel into the heated gas flow in the flow conduit upstream of the oxidation catalyst station;
- generating an exotherm at an outlet face of the substrate comprising the oxidation catalyst;
- maintaining said exotherm at a steady state for a first period of time;
- generating a temperature ramp-down to achieve a temperature drop at a first rate at an inlet face of said substrate comprising the oxidation catalyst; and thereby
- determining a quench temperature of said substrate comprising the oxidation catalyst.

The features and advantages of the first and second aspects apply equally to the third aspect.

In some examples generating the exotherm and/or generating the temperature ramp-down comprises controlling a fuel burn rate and/or a gas flow rate and/or a heat output of the non-engine-based heat source and/or controlling an injection of fuel by the fuel injector.

In some examples the exotherm is at least 600°C.

In some examples determining the quench temperature comprises determining the heated gas flow temperature at an inlet face of the substrate when the heated gas flow temperature at an outlet face of the substrate reaches a threshold temperature; and optionally wherein the threshold temperature is 425°C to 500°C, optionally is 425°C or 500°C.

In some examples the first period of time is 5 minutes.

In some examples the first rate is 1°C temperature drop per minute.

In some examples the gas flow rate is 100 to 720 kg/hr, optionally is 400 kg/hr, or 720 kg/hr.

In some examples the space velocity is 10,000 to 100,00 hr⁻¹.

In some examples prior to generating the exotherm the substrate comprising the oxidation catalyst is conditioned by:
- obtaining and maintaining an inlet face temperature of the substrate comprising the oxidation catalyst of 490°C for 20 minutes;
- carrying out a fast cool-down to an inlet face temperature of about 320°C;
- holding the inlet face temperature at about 320°C for 10 minutes.

In some examples the substrate comprising the oxidation catalyst comprises or consists of a substrate and a diesel oxidation catalyst. In other examples the substrate comprising an oxidation catalyst comprises or consists of a substrate and a hydrogen oxidation catalyst.

In some examples the fuel comprises or consists of diesel or hydrogen.

In some examples the non-engine-based heat source comprises a diesel particulate generator or an electrical heater.

In some examples the diesel particulate generator stoichiometrically- or lean-burns a diesel fuel.

The method may further comprise producing a homogenous, or substantially homogenous, distribution of fuel in the heated gas flow across a cross-section of the flow conduit at the inlet face of the substrate comprising the oxidation catalyst.

In any of the aspects of the present invention the substrate comprising the oxidation catalyst can be a ceramic substrate or a metallic substrate. The ceramic substrate may be made of any suitable refractory material, e.g., alumina, silica, titania, ceria, zirconia, magnesia, zeolites, silicon nitride, silicon carbide, zirconium silicates, magnesium silicates, aluminosilicates, metalloaluminosilicates (such as cordierite and spudomene), or a mixture or mixed oxide of any two or more thereof.

The metallic substrates may be made of any suitable metal, and in particular heat-resistant metals and metal alloys such as titanium and stainless steel as well as ferritic alloys containing iron, nickel, chromium, and/or aluminium in addition to other trace metals.

The substrate may be a flow-through substrate, e.g., a flow-through monolith having a honeycomb structure with many small, parallel thin-walled channels running axially through the substrate and extending throughout from an inlet or an outlet of the substrate. The channel cross-section of the substrate may be any shape, but is preferably square, sinusoidal, triangular, rectangular, hexagonal, trapezoidal, circular, or oval. The flow-through substrate may have porous channel walls which allows catalyst coatings to penetrate into the substrate walls. For certain applications, the flow-through monolith substrate has a cell density of about 600 to 800 cells per square inch, and/or an average internal wall thickness of about 0.18-0.35 mm, or about 0.20-0.25 mm. For certain other applications, the flow-through monolith substrate has a low cell density of about 150-600 cells per square inch, or about 200-400 cells per square inch.

The substrate may be a filter substrate. For example, the filter substrate may be a wall-flow monolith filter substrate. The channels of a wall-flow filter are alternately blocked, which allow the exhaust gas stream to enter a channel from the inlet, then flow through the channel walls, and exit the filter from a different channel leading to the outlet.

The substrate may comprise a washcoat. The washcoat can be a composition that coats on and/or within the channel walls. The washcoat generally comprises a catalyst composition. The catalyst composition of the oxidation catalyst can be a diesel oxidation catalyst (DOC), a three-way catalyst (TWC), a NOₓ absorber catalyst, a hydrogen oxidation catalyst (HOC), an oxidation catalyst as such, or a hydrocarbon trap, for example.

When the oxidation catalyst composition is DOC, the washcoat generally comprises one or more platinum group metals (PGM). Preferably the PGMs are present in a total amount such that the final coating contains at least 1 g/ft³. In addition to the PGM, the washcoat may comprise a support material. Suitable support materials include silica, alumina, ceria, ceria-zirconia and the like. Preferably the support material comprises alumina. One or more support materials may be present. The support material such as alumina can be doped with a dopant. The dopant can be selected from the group consisting of La, Sr, Si, Ba, Y, Pr, Nd, Ce, and mixtures thereof. Preferably, the dopant is La, Ba, or Ce. Most preferably, the dopant is La. The dopant content in the inorganic oxide support can be from 1 to 30 wt%.

When the oxidation catalyst composition is TWC catalyst, the catalyst comprises one or more platinum group metals (PGM), a support material, and an oxygen storage capacity (OSC) material. Suitable OSC material may comprises a mixed oxide of cerium, zirconium; a mixed oxide of cerium, zirconium, and aluminium; a mixed oxide of cerium, zirconium, and neodymium; or a mixed oxide of cerium, zirconium and praseodymium. The term "mixed oxide" as used herein generally refers to a mixture of oxides in a single phase, as is conventionally known in the art.

In any of the aspects of the present invention the term "controller" may refer to a function that may comprise hardware and/or software. The controller may comprise a control unit or may be a computer program running on a dedicated or shared computing resource. The controller may comprise a single unit or may be composed of a plurality of sub-units that are operatively connected. The controller may be located on one processing resource or may be distributed across spatially separate processing resources. The controller may comprise a microcontroller, one or more processors (such as one or more microprocessors), memory, configurable logic, firmware, etc. In some preferred examples the controller comprises or consists of a pre-programmed computer processor unit.

### Brief description of the drawings

Aspects and embodiments of the present disclosure will now be described, by way of example only, with reference to the accompanying drawings, in which:
Figure 1 is a schematic diagram of a portion of an aftertreatment system of an engine;
Figure 2 is a schematic diagram of an apparatus for determining an exotherm characteristic of the substrate comprising an oxidation catalyst according to the present invention;
Figure 3 is a graph of the temperature and hydrocarbon (HC) slip of a sample diesel oxidation catalyst (DOC) substrate when tested in an aftertreatment system of an engine;
Figure 4 is a graph of the temperature and HC slip of a sample DOC substrate when tested on the apparatus of Figure 2 according to the present invention; and
Figure 5 is a graph comparing temperatures and HC slip for two sample DOC substrates when tested on the apparatus of Figure 2 according to the present invention.

### Detailed description

The skilled reader will recognise that one or more features of one aspect or embodiment of the present disclosure may be combined with one or more features of any other aspect or embodiment of the present disclosure unless the immediate context teaches otherwise.

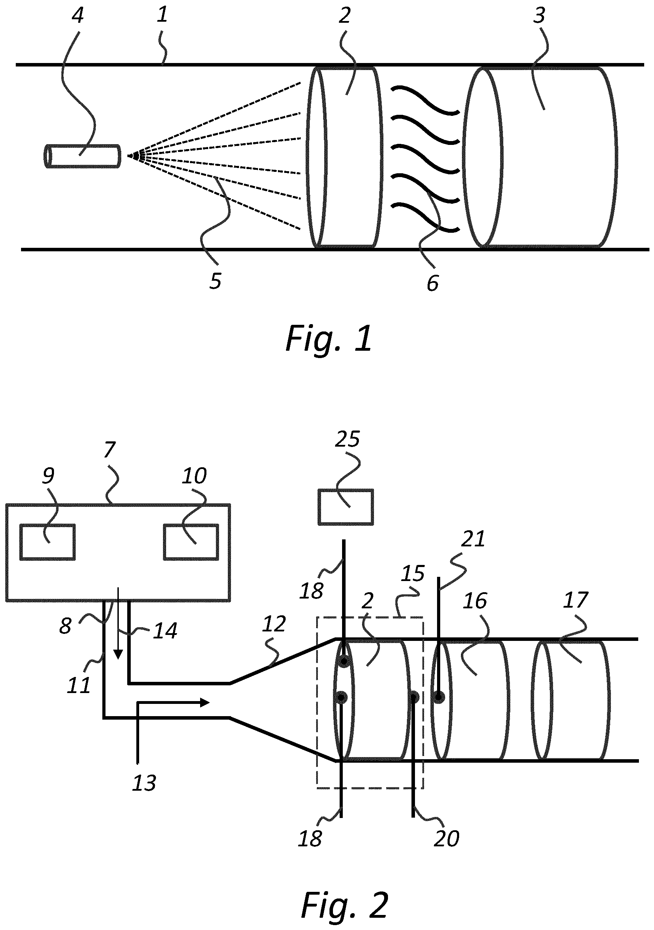

Figure 1 shows a schematic diagram of a portion of an aftertreatment system of an engine. The system comprises a conduit 1 having located therein a diesel oxidation catalyst (DOC) substrate 2 and a catalysed soot filter 3 downstream of the DOC substrate 2. A fuel injector 4 is provided upstream of the catalysed soot filter 3. In use, exhaust gas from the engine requiring treatment is fed along the conduit 1 to pass sequentially through the DOC substrate 2 and the catalysed soot filter 3. In order to periodically regenerate, i.e. to increase the temperature of the downstream filter thereby to combust soot held thereon, the catalysed soot filter 3 fuel, e.g. diesel fuel, can be injected by fuel injector 4 as a spray 5 upstream of the DOC substrate 2. The fuel combusts and heats the DOC substrate 2 sufficiently to generate an exotherm in the DOC substrate 2. The heat 6 so generated is transferred to the downstream catalysed soot filter 3 resulting in burn-off of trapped particulate matter held in the substrate of the catalysed soot filter 3.

Figure 2 shows a schematic diagram of an apparatus for determining an exotherm characteristic of an oxidation catalyst substrate 2 according to the present invention. In the following examples the substrate comprising the oxidation catalyst 2 will be exemplified as a DOC. However, the oxidation catalyst of the substrate 2 may take other forms, e.g. a hydrogen oxidation catalyst.

The apparatus comprises a non-engine-based heat source 7. The non-engine-based heat source 7 may be located in a fixed location, for example a laboratory. In the following examples the non-engine-based heat source 7 will be exemplified as a diesel particulate generator (DPG) 7 configured to burn a diesel fuel. However, other non-engine-based heat sources may be utilised, for example an electrical heater.

While the DPG 7 may be configured to generate particulates and output a heated gas flow 14 containing said particulates through a gas outlet 8, it is preferred that the DPG 7 is configured to stoichiometrically- or lean-burn the diesel fuel so as to minimise the generation of particles such as soot.

The non-engine-based DPG 7 may comprise a fuel burner 9 and means, for example a fan 10, for generating the heated gas flow 14. The fuel burner 9 may be fed from a fuel reserve (not shown), for example a reservoir. The non-engine-based DPG 7 may comprise an inlet for entry of gas from atmosphere and a conduit for transporting gas within the non-engine-based DPG 7. The non-engine-based DPG 7 may additionally comprise means, when in use, for controlling the fuel flow rate of the fuel burner 9 and means, when in use, for controlling the temperature of the fuel. A flow meter may be provided to determine the rate of gas flowing through the inlet and/or the gas outlet 8.

Heated gas from the gas outlet 8 is channelled into a flow conduit 11 of the apparatus. The gas outlet 8 and flow conduit 11 may be directly coupled together or integrated. Thus, the flow conduit 11 receives the heated gas flow 14 from the non-engine-based DPG 7.

The flow conduit 11 comprises an oxidation catalyst station 15 for holding the DOC substrate 2.

A fuel injector 13 is configured to inject fuel into the gas flow 14 in the flow conduit 11 upstream of the oxidation catalyst station 15. The fuel injector 13 is preferably located downstream of the non-engine-based DPG 7.

One or more temperature sensors are provided for measuring temperatures of relevant components. The temperature sensor(s) may comprise, for example, thermocouples that may be attached to inlet/outlet faces of the substrate comprising the DOC 2 or inserted by a small distance into the entrances of the channels at the inlet/outlet faces of the substrate comprising the DOC 2. For example, from 1 to 20 thermocouples may be provided at each of the inlet face and the outlet face of the substrate comprising the DOC 2.

One or more inlet face temperature sensors 18 are provided that are configured to measure the temperature of the heated gas flow 14 at the inlet face of the DOC substrate 2 installed in the oxidation catalyst station 15. A plurality of inlet face temperature sensors 18 may be provided at locations across the cross-section of the inlet face. For example, inlet face temperature sensors 18 may be provided at or towards a centre of the inlet face and at/or towards a periphery of the inlet face as shown schematically in Figure 2 and/or in a mid-region of the inlet face. One or more outlet face temperature sensors 20 are also provided configured to measure the temperature of the heated gas flow 14 at the outlet face of the substrate comprising the DOC 2 installed in the oxidation catalyst station 15. As with the inlet face temperature sensors 18, the outlet face temperature sensors 20 may be provided at locations across the cross-section of the outlet face, e.g. at the centre and periphery and mid-region, etc.

Preferably one or more hydrocarbon (HC) sensors 21 are also provided that are configured to detect hydrocarbon (HC) slip through the substrate comprising the DOC 2 in use when installed in the oxidation catalyst station 15. The or each HC sensor 21 may be located downstream of the substrate comprising the DOC 2.

The apparatus may further comprise one or more clean-up catalysts 16, 17 located in the flow conduit 11 downstream of the oxidation catalyst station 15 for mitigating emissions from the test apparatus. The clean-up catalysts 16, 17 may function to remove HC from the heated gas flow 14 before the heated gas flow is discharged to atmosphere. For example, one catalyst 16 may be provided or two clean-up catalysts 16, 17 may be provided in series, each comprising a PGM-loaded DOC substrate, in particular a substrate comprising the DOC having a higher PGM loading than that of the substrate comprising the DOC 2 held in the oxidation catalyst station 15.

A controller 25 may be provided configured to control operation of the non-engine-based DPG 7 and the fuel injector 13. The controller 25 may also be operatively connected to the temperature sensors 18, 20 and the HC sensor 21. In some examples the controller 25 comprises a pre-programmed computer processor unit.

In use of the apparatus the controller 25 is configured to control the non-engine-based DPG 7 to achieve an exotherm in the substrate comprising the DOC 2 installed in the oxidation catalyst station 15 and then determine an exotherm characteristic of the substrate comprising the DOC 2 based on the sensed readings from the temperature sensors 18, 20 and/or the HC sensor 21.

Various testing protocols may be used with the apparatus to determine an exotherm characteristic of the substrate comprising the DOC 2. In general, in some applicable protocols, the test comprises the steps of:
- controlling a fuel burn rate and/or a gas flow rate of the non-engine-based DPG 7 (e.g. by control of the fuel injector 13 and/or the fan 10) to achieve an exotherm at an outlet face of the substrate comprising the DOC 2 installed in the oxidation catalyst station 15;
- maintaining said exotherm at a steady state for a first period of time;
- then controlling the fuel burn rate and/or the gas flow rate to achieve a temperature ramp-down to achieve a temperature drop at a first rate at an inlet face of the substrate comprising the DOC 2; and
- determining using the one or more temperature sensors 18, 20 a quench temperature of the substrate comprising the DOC 2.

The quench temperature may, for example, be defined as the heated gas flow temperature at the inlet face of the DOC substrate 2 when the heated gas flow temperature at the outlet face of the DOC substrate 2 reaches a threshold temperature, e.g. a pre-determined threshold temperature.

A first example testing protocol, in more detail, provides a continuous exotherm test:
The non-engine-based DPG 7 was fuelled with EUVI B7 fuel (7% Bio fuel). Temperature sensors in the form of thermocouples were located at the substrate comprising the DOC inlet and at the substrate comprising the DOC outlet respectively. Additionally, a hydrocarbon sensor was located at the substrate outlet.

The substrate comprising the DOC was conditioned at an inlet face temperature of 490°C for 20 minutes, followed by a fast cool-down to an inlet face temperature of about 320°C. The substrate comprising the DOC was held at about 320°C and about 400 kg/h flow rate into the substrate comprising the DOC for 10 minutes. Hydrocarbon injection via the fuel injector was then begun at a rate to achieve an exotherm generating 600°C at the substrate outlet face. This exotherm was maintained at steady state for 5 minutes. A hydrocarbon oxidation catalyst light-out temperature ramp-down was then begun by continuously adjusting the non-engine-based DPG to achieve a 1°C temperature drop per minute at the substrate inlet face and at a flow rate of 400 kg/h. The heated gas flow temperature at the substrate inlet face was recorded when the heated gas flow temperature at the substrate outlet face was 500°C and below. This temperature was determined as the "quench" temperature of the DOC, i.e. the heated gas flow temperature at the inlet face at and below which exotherm generation is considered to be "quenching". As a means of providing greater resolution of the "quench" temperature, data for the inlet face temperature recorded when 800 ppm hydrocarbons or more was detected at the DOC substrate outlet face was recorded. This information is useful evidence of catalyst activity in that the more hydrocarbon that slips the substrate comprising the DOC, the less active the catalyst is to combust that slipped hydrocarbon. Therefore, hydrocarbon slip is a measure of the advance towards exotherm extinguishment for the tested substrate comprising the DOC.

A second example testing protocol, in more detail, provides a continuous exotherm test:
The substrate comprising the DOC was conditioned at an inlet face temperature of 490 °C for 20 minutes, followed by a fast cool-down to an inlet face temperature of 320 °C at which the DOC substrate was held for 10 minutes. Hydrocarbon injection via the fuel injector was then begun at a rate to achieve an exotherm generating 600°C at the DOC substrate outlet face. This exotherm was maintained at steady state for 5 minutes. A hydrocarbon oxidation catalyst light-out temperature ramp-down was then begun by continuously adjusting the non-engine-based DPG to achieve a 1 °C inlet temperature drop per minute at a flow rate of 720 kg/h. The test was stopped when the temperature at the outlet face of the substrate was below 425 °C or a hydrocarbon slip analyser limit of 1500 ppm C₃ was reached.

A third example testing protocol, in more detail, provides:
The non-engine-based DPG 7 was fuelled with EUVI B7 fuel (7% Bio fuel). Temperature sensors in the form of thermocouples were located at the inlet to the DOC substrate and were inserted at various axial locations along the centre line of the substrate comprising the DOC.

The substrate comprising the DOC was conditioned for 10 minutes at an inlet face gas flow temperature of 490°C at a gas flow-rate of 1000 kg/hour followed by a rapid cooling step. The gas flow rate was then set to 720 kg/hour (corresponding to 120,000 hr⁻¹ space velocity for the size and volume of substrate tested) with the non-engine-based DPG 7 controlled so that a stable set inlet face gas flow temperature of about 270°C was achieved for approximately 1800 seconds. The ability for the substrate comprising the DOC to generate an exotherm at each stabilised set temperature was then tested by injecting hydrocarbon fuel via the fuel injector targeting both 600°C and a stable hydrocarbon slip at the outlet face of the substrate via downstream thermocouple and hydrocarbon sensors. The test was stopped if the hydrocarbon slip measured downstream from the substrate comprising the DOC exceeded 1000 ppm C₃, i.e. no matter what the length of the hydrocarbon chain in the detected hydrocarbons - the modal carbon chain length in a typical diesel fuel is C₁₆ - the test would be stopped if the equivalent of 1000 ppm C₃ was detected. So, if 187.5ppm C₁₆ were detected, this was equivalent to 1000 ppm C₃ (C₁₆ is equivalent to 5⅓ x C₃ hydrocarbons).

Following the test at the about 270°C set inlet temperature, the system was again preconditioned at an inlet face gas flow temperature of 490°C for 10 minutes at a flow rate of 1000 kg/hour followed by a rapid cooling and an exotherm test at a second set temperature, e.g. about 260°C. This cycle was repeated to test exotherm generation at set temperatures of about 250°C, 240°C and 230°C. The test was stopped when either the substrate comprising the DOC cannot generate a stable exotherm of 600°C at the DOC substrate outlet face or the hydrocarbon slip measured at the substrate comprising the DOC outlet exceeds 1000 ppm (C₃).

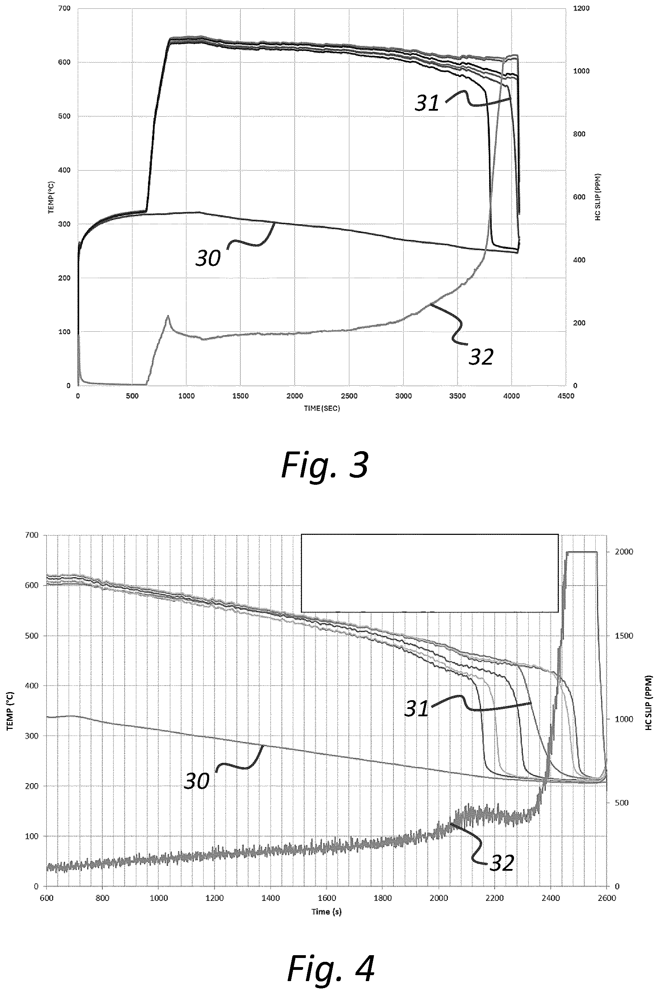

Figure 3 shows a graph of the temperature and hydrocarbon (HC) slip of a sample substrate comprising a DOC when tested in an aftertreatment system of an engine. The exhaust gas temperature at the inlet face of the substrate comprising the DOC is shown by line 30. The exhaust gas temperature at the outlet face of the substrate comprising the DOC as measured by various thermocouples distributed across the outlet face is shown by lines 31. The HC slip through the substrate comprising the DOC is shown by line 32.

Figure 4 shows a graph of the temperature and HC slip of a sample substrate comprising a DOC substrate 2 when tested on the apparatus of Figure 2 according to the present invention. As can be seen the apparatus is able to accurately reproduce the conditions of an engine-based exotherm test. The heated gas flow temperature at the inlet face of the substrate comprising the DOC 2 is shown by line 30. The heated gas flow temperature at the outlet face of the substrate comprising the DOC 2 as measured by various thermocouples distributed across the outlet face is shown by lines 31. The HC slip through the substrate comprising the DOC 2 is shown by line 32. The quench temperature may be determined, for example, with reference to the output from one or more of the thermocouples at the outlet face. For example, the quench temperature may be taken as the inlet face temperature at which the first outlet face thermocouple reaches the threshold temperature, e.g. a pre-determined threshold temperature. This will typically be a thermocouple located at a periphery of the outlet face. Alternatively, a different thermocouple may be used to determine the quench temperature, e.g. a thermocouple located at a centre of the outlet face.

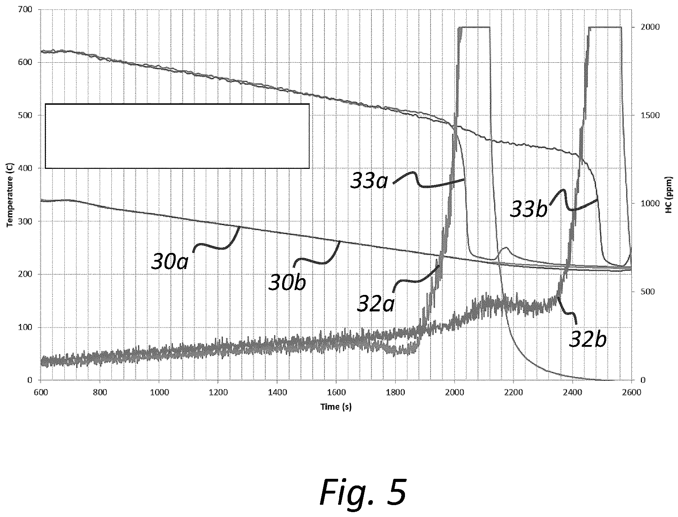

Figure 5 shows a graph comparing temperatures and HC slip for two sample DOC substrates 2 when tested on the apparatus of Figure 2 according to the present invention. The results of Figure 5 illustrate that the quench temperatures of different substrates comprising DOCs A and B may vary. In the example cases shown the heated gas flow temperature at the inlet face of the substrate comprising the DOC A and B are shown by lines 30a and 30b respectively (these are generally equal to each other as can be seen). The heated gas temperature at the outlet faces of the substrates comprising DOCs A and B are shown by lines 33a and 33b respectively. The HC slip through the substrates comprising DOCs A and B are shown by lines 32a and 32 b respectively. The quench temperature of DOC substrate A is about 230°C and of DOC substrate B about 215°C.

The invention may also be defined according to one or more of the following statements of invention:
1. An apparatus for determining an exotherm characteristic of a substrate comprising an oxidation catalyst having a substrate inlet face and a substrate outlet face, the apparatus comprising:
   a non-engine-based heat source configured to generate and output a heated gas flow through a gas outlet;
   a flow conduit coupled with the gas outlet to receive the heated gas flow, the flow conduit comprising an oxidation catalyst station configured to hold a substrate comprising an oxidation catalyst;
   a fuel injector configured to inject fuel into the heated gas flow in the flow conduit upstream of the oxidation catalyst station; and
   one or more temperature sensors, the one or more temperature sensors including one or more inlet face temperature sensors configured to measure the temperature of the heated gas flow at an inlet face of a substrate comprising an oxidation catalyst installed in the oxidation catalyst station and one or more outlet face temperature sensors configured to measure the temperature of the heated gas flow at an outlet face of said substrate comprising an oxidation catalyst installed in the oxidation catalyst station.
2. The apparatus of 1, further comprising one or more hydrocarbon sensors configured to detect hydrocarbon slip through said substrate comprising the oxidation catalyst installed in the oxidation catalyst station; and optionally the one or more hydrocarbon sensors are located at or downstream of the outlet face of the substrate.
3. The apparatus of 1 or claim 2, wherein the fuel injector is located downstream of the non-engine-based heat source.
4. The apparatus of any of 1 to 3, further comprising one or more clean-up catalysts located in the flow conduit downstream of the oxidation catalyst station; optionally two or more clean-up catalysts located in series in the flow conduit downstream of the oxidation catalyst station.
5. The apparatus of 4, wherein the or each clean-up catalyst comprises a substrate comprising an oxidation catalyst, optionally a diesel oxidation catalyst.
6. The apparatus of any of 1 to 5, further comprising a controller configured to control operation of the non-engine-based heat source and the fuel injector.
7. The apparatus of 6, wherein the controller comprises a pre-programmed computer processor unit.
8. The apparatus of 6 or 7, wherein the controller is configured to:
   - control a fuel burn rate and/or a gas flow rate and/or a heat output of the non-engine-based heat source and/or to control an injection of fuel by the fuel injector to generate an exotherm at an outlet face of a substrate comprising an oxidation catalyst installed in the oxidation catalyst station;
   - to maintain said exotherm at a steady state for a first period of time;
   - to then control the fuel burn rate and/or the gas flow rate and/or the heat output and/or to control the injection of fuel by the fuel injector to achieve a temperature ramp-down to achieve a temperature drop at a first rate at an inlet face of said substrate comprising the oxidation catalyst substrate; and
   - to determine using the one or more temperature sensors a quench temperature of said substrate comprising the oxidation catalyst.
9. The apparatus of 8, wherein the exotherm is at least 600°C.
10. The apparatus of 8 or 9, wherein determining the quench temperature comprises determining the heated gas flow temperature at the inlet face of said substrate comprising the oxidation catalyst when the heated gas flow temperature at the outlet face of said substrate reaches a threshold temperature.
11. The apparatus of 10, wherein the threshold temperature is 425°C to 500°C, optionally is 425°C or 500°C.
12. The apparatus of any one of 8 to 11, wherein the first period of time is 5 minutes.
13. The apparatus of any one of 8 to 12, wherein the first rate is 1°C temperature drop per minute.
14. The apparatus of any one of 8 to 13, wherein the gas flow rate is 100 to 720 kg/hr, optionally is 400 kg/hr, or 720 kg/hr.
15. The apparatus of any one of 8 to 14, wherein prior to generating the exotherm the controller is configured to condition said substrate comprising the oxidation catalyst by:
   - obtaining and maintaining an inlet face temperature of said substrate of 490°C for 20 minutes;
   - carrying out a fast cool-down to an inlet face temperature of about 320°C;
   - holding the inlet face temperature at about 320°C for 10 minutes.
16. The apparatus of any one of 1 to 15, wherein the substrate comprising the oxidation catalyst comprises or consists of a diesel oxidation catalyst and a substrate or a hydrogen oxidation catalyst and a substrate.
17. The apparatus of any one of 1 to 16, wherein the fuel that is injected by the fuel injector comprises or consists of diesel or hydrogen.
18. The apparatus of any one of 1 to 17, wherein the non-engine-based heat source comprises a diesel particulate generator or an electrical heater.
19. The apparatus of 18, wherein the diesel particulate generator is configured to stoichiometrically- or lean-burn a diesel fuel.
20. The apparatus of any one of 1 to 19, wherein the oxidation catalyst station is configured to hold a substrate having a diameter of 2.5 to 33 cm and/or a length of 2.5 to 15.2 cm.
21. The apparatus of any one of 1 to 20, further comprising a fuel reservoir containing a volume of diesel or hydrogen fuel.
22. The apparatus of any one of 1 to 21, further comprising, in between the fuel injector and the substrate comprising the oxidation catalyst, means for producing a homogenous, or substantially homogenous, distribution of fuel in the heated gas flow across a cross-section of the flow conduit at the inlet face of the substrate.
23. A system comprising the apparatus of any one of 1 to 22 and a substrate comprising an oxidation catalyst held in the oxidation catalyst station.
24. The system of 23, wherein the substrate comprising the oxidation catalyst comprises or consists of a diesel oxidation catalyst and a substrate or a hydrogen oxidation catalyst and a substrate.
25. The system of 23 or 24, wherein the substrate has a diameter of 2.5 to 33 cm and/or a length of 2.5 to 15.2 cm.
26. A method of determining an exotherm characteristic of a substrate comprising an oxidation catalyst, the method comprising:
   - installing the substrate comprising an oxidation catalyst in an oxidation catalyst station of a flow conduit that is coupled to an outlet of a non-engine-based heat source;
   - outputting a heated gas flow from the non-engine-based heat source into the flow conduit and passing the heated gas flow through the substrate comprising the oxidation catalyst ;
   - injecting fuel into the heated gas flow in the flow conduit upstream of the oxidation catalyst station;
   - generating an exotherm at an outlet face of the substrate;
   - maintaining said exotherm at a steady state for a first period of time;
   - generating a temperature ramp-down to achieve a temperature drop at a first rate at an inlet face of said substrate comprising the oxidation catalyst; and thereby
   - determining a quench temperature of said substrate comprising the oxidation catalyst.
27. The method of 26, wherein generating the exotherm and/or generating the temperature ramp-down comprises controlling a fuel burn rate and/or a gas flow rate and/or a heat output of the non-engine-based heat source and/or controlling an injection of fuel by the fuel injector.
28. The method of 26 or 27, wherein the exotherm is at least 600°C.
29. The method of 26, 27 or 28, wherein determining the quench temperature comprises determining the heated gas flow temperature at an inlet face of the substrate when the heated gas flow temperature at an outlet face of the substrate reaches a threshold temperature; and optionally wherein the threshold temperature is 425°C to 500°C, optionally is 425°C or 500°C.
30. The method of any one of 26 to 29, wherein the first period of time is 5 minutes.
31. The method of any one of 26 to 30, wherein the first rate is 1°C temperature drop per minute.
32. The method of any one of 26 to 31, wherein the gas flow rate is 100 to 720 kg/hr, optionally is 400 kg/hr, or 720 kg/hr.
33. The method of any one of 26 to 32, wherein the space velocity is 10,000 to 100,00 hr⁻¹.
34. The method of any one of 26 to 33, wherein prior to generating the exotherm the substrate comprising the oxidation catalyst is conditioned by:
   - obtaining and maintaining an inlet face temperature of the substrate of 490°C for 20 minutes;
   - carrying out a fast cool-down to an inlet face temperature of about 320°C;
   - holding the inlet face temperature at about 320°C for 10 minutes.
35. The method of any one of 26 to 34, wherein the substrate comprising an oxidation catalyst comprises or consists of a diesel oxidation catalyst and a substrate or a hydrogen oxidation catalyst and a substrate.
36. The method of any one of 26 to 35, wherein the fuel comprises or consists of diesel or hydrogen.
37. The method of any one of 26 to 36, wherein the non-engine-based heat source comprises a diesel particulate generator or an electrical heater.
38. The method of any one of 26 to 37, wherein the diesel particulate generator stoichiometrically- or lean-burns a diesel fuel.
39. The method of any one of 26 to 38, further comprising producing a homogenous, or substantially homogenous, distribution of fuel in the heated gas flow across a cross-section of the flow conduit at the inlet face of the substrate.

## Claims

1. An apparatus for determining an exotherm characteristic of a substrate comprising an oxidation catalyst having a substrate inlet face and a substrate outlet face, the apparatus comprising:
a non-engine-based heat source configured to generate and output a heated gas flow through a gas outlet;
a flow conduit coupled with the gas outlet to receive the heated gas flow, the flow conduit comprising an oxidation catalyst station configured to hold a substrate comprising an oxidation catalyst;
a fuel injector configured to inject fuel into the heated gas flow in the flow conduit upstream of the oxidation catalyst station; and
one or more temperature sensors, the one or more temperature sensors including one or more inlet face temperature sensors configured to measure the temperature of the heated gas flow at an inlet face of a substrate comprising an oxidation catalyst installed in the oxidation catalyst station and one or more outlet face temperature sensors configured to measure the temperature of the heated gas flow at an outlet face of said substrate comprising an oxidation catalyst installed in the oxidation catalyst station.

2. The apparatus of claim 1, further comprising one or more hydrocarbon sensors configured to detect hydrocarbon slip through said substrate comprising the oxidation catalyst installed in the oxidation catalyst station; and optionally the one or more hydrocarbon sensors are located at or downstream of the outlet face of the substrate.

3. The apparatus of claim 1 or claim 2, wherein the fuel injector is located downstream of the non-engine-based heat source.

4. The apparatus of any preceding claim, further comprising a controller, optionally a pre-programmed computer processor unit, configured to control operation of the non-engine-based heat source and the fuel injector.

5. The apparatus of claim 4, wherein the controller is configured to:
- control a fuel burn rate and/or a gas flow rate and/or a heat output of the non-engine-based heat source and/or to control an injection of fuel by the fuel injector to generate an exotherm at an outlet face of a substrate comprising an oxidation catalyst installed in the oxidation catalyst station;
- to maintain said exotherm at a steady state for a first period of time;
- to then control the fuel burn rate and/or the gas flow rate and/or the heat output and/or to control the injection of fuel by the fuel injector to achieve a temperature ramp-down to achieve a temperature drop at a first rate at an inlet face of said substrate comprising the oxidation catalyst substrate; and
- to determine using the one or more temperature sensors a quench temperature of said substrate comprising the oxidation catalyst.

6. The apparatus of claim 5, wherein determining the quench temperature comprises determining the heated gas flow temperature at the inlet face of said substrate comprising the oxidation catalyst when the heated gas flow temperature at the outlet face of said substrate reaches a threshold temperature.

7. The apparatus of claim 5 or 6, wherein prior to generating the exotherm the controller is configured to condition said substrate comprising the oxidation catalyst by:
- obtaining and maintaining an inlet face temperature of said substrate of 490°C for 20 minutes;
- carrying out a fast cool-down to an inlet face temperature of about 320°C;
- holding the inlet face temperature at about 320°C for 10 minutes.

8. The apparatus of any preceding claim, wherein the substrate comprising the oxidation catalyst comprises or consists of a diesel oxidation catalyst and a substrate or a hydrogen oxidation catalyst and a substrate.

9. The apparatus of any preceding claim, wherein the fuel that is injected by the fuel injector comprises or consists of diesel or hydrogen.

10. The apparatus of any preceding claim, wherein the non-engine-based heat source comprises a diesel particulate generator or an electrical heater.

11. The apparatus of claim 10, wherein the diesel particulate generator is configured to stoichiometrically- or lean-burn a diesel fuel.

12. The apparatus of any preceding claim, further comprising a fuel reservoir containing a volume of diesel or hydrogen fuel.

13. The apparatus of any preceding claim, further comprising, in between the fuel injector and the substrate comprising the oxidation catalyst, means for producing a homogenous, or substantially homogenous, distribution of fuel in the heated gas flow across a cross-section of the flow conduit at the inlet face of the substrate.

14. A system comprising the apparatus of any preceding claim and a substrate comprising an oxidation catalyst held in the oxidation catalyst station.

15. A method of determining an exotherm characteristic of a substrate comprising an oxidation catalyst, the method comprising:
- installing the substrate comprising an oxidation catalyst in an oxidation catalyst station of a flow conduit that is coupled to an outlet of a non-engine-based heat source;
- outputting a heated gas flow from the non-engine-based heat source into the flow conduit and passing the heated gas flow through the substrate comprising the oxidation catalyst;
- injecting fuel into the heated gas flow in the flow conduit upstream of the oxidation catalyst station;
- generating an exotherm at an outlet face of the substrate;
- maintaining said exotherm at a steady state for a first period of time;
- generating a temperature ramp-down to achieve a temperature drop at a first rate at an inlet face of said substrate comprising the oxidation catalyst; and thereby
- determining a quench temperature of said substrate comprising the oxidation catalyst.
